# EUROPÄISCHE PATENTSCHRIFT

(11) **EP 1 362 077 B1**
(45) Veröffentlichungstag und Bekanntmachung des Hinweises auf die Patenterteilung: **12.07.2006**
(21) Anmeldenummer: 02714121.7
(22) Anmeldetag: 25.01.2002
(51) Int. Cl.: C08K 5/00, C08L 75/00, C08G 18/00

(54) **PHOTOCHROMER KUNSTSTOFFGEGENSTAND**
PHOTOCHROMIC PLASTIC OBJECT
OBJET EN PLASTIQUE PHOTOCHROME

(30) Priorität: 29.01.2001 DE 10103784
(43) Veröffentlichungstag der Anmeldung: 19.11.2003
(73) Patentinhaber: Rodenstock GmbH, 80469 München (DE); La Dous, Jobst, 47809 Krefeld (DE)
(72) Erfinder: LA DOUS, Jobst, 47809 Krefeld (DE)
(74) Vertreter: Müller-Boré & Partner Patentanwälte
(86) Internationale Anmeldenummer: PCT/EP2002/000842
(87) Internationale Veröffentlichungsnummer: WO 2002/060984

(56) Entgegenhaltungen:
- EP-A- 0 735 097
- EP-A- 0 927 730
- FR-A- 2 674 529
- US-A- 6 067 186
- US-A- 6 153 363

## Beschreibung

Die vorliegende Erfindung betrifft einen photochromen Kunststoffgegenstand, der ein transparentes Kunststoffmaterial, das aus mindestens zwei sich gegenseitig durchdringenden Polymer-Netzwerken voneinander verschiedener Polymermaterialien aufgebaut ist, und darin homogen verteilt mindestens einen photochromen Farbstoff umfasst, sowie ein Verfahren zu dessen Herstellung.

Für die Herstellung von photochromen Gegenständen aus Kunststoffen, speziell Brillengläsern, sind mehrere Verfahren bekannt und industriell im Einsatz: nämlich die Massefärbung, d.h. die Zugabe der photochromen Farbstoffe in die Gießharzmischung vor der Polymerisation, die Oberflächenfärbung, bei der in mindestens eine Oberfläche des zumindest teilweise ausgehärteten, den Kunststoffgegenstand aufbauenden Kunststoffmaterials ("Matrix") die photochromen Farbstoffe mittels thermischer Diffusion eingebracht werden, wobei üblicherweise ein Zwischenträger, der die photochromen Moleküle vor der Diffusion aufnimmt und der anschließend wieder entfernt wird, verwendet wird, und die Beschichtung, bei der eine photochrome Schicht in einer Dicke von etwa 10 - 50 µm auf den ausgehärteten Kunststoffgegenstand aufgebracht wird.

In allen Fällen werden die photochromen Eigenschaften der verwendeten Farbstoffe durch die sie umgebende Matrix stark beeinflußt. Dies betrifft in geringerem Maße die Farbe, jedoch stärker die Lebensdauer, d.h. die Verwendungszeit des entsprechenden photochromen Kunststoffgegenstands im Gebrauch, und insbesondere die kinetischen Eigenschaften, d.h. die Eindunkelungs- und Aufhellgeschwindigkeit, die Eindunkelungstiefe und deren Abhängigkeit von der Temperatur.

Insofern sollen Kunststoffmaterialien für photochrome Farbstoffe zwei - meist gegenläufige - Anforderungen erfüllen. Sie sollen einerseits genügend freien Raum bieten, so daß sich die photochromen Moleküle nach der Lichtanregung strukturell möglichst ungehindert in die offene farbige Form und nach Beendigung der Belichtung bzw. bei beginnender Verdunkelung, wieder in die geschlossene farblose Form umlagern können. Dabei ist für die meisten Anwendungsgebiete ein enges Zeitfenster erforderlich. Für die Eindunkelung liegt dieses Zeitfenster üblicherweise im Bereich von 10 bis 100 Sekunden und für die Aufhellung im Bereich von 1 bis 10 Minuten. Da die meisten photochromen Moleküle in der offenen Form gegen Luftsauerstoff empfindlich sind, muß die Kunststoffmatrix andererseits möglichst diffusionsdicht sein. Dies ist mit einem Polymer-Netzwerk mit großen freien Räumen nur schwer zu vereinbaren. Die derzeit verfügbaren Kunststoffmaterialien zeigen entweder eine gute Lebensdauer, die aber mit einer vergleichsweise langsamen Kinetik der Eindunkelung und Aufhellung verbunden ist, oder sie zeigen eine schnelle Reaktionskinetik gegenüber unterschiedlichen Belichtungsintensitäten, dies aber nur im Rahmen einer äußerst begrenzten Lebensdauer. Zur ersten Gruppe gehören solche Kunststoffmaterialien, die in eher teueren Gebrauchsgegenständen Verwendung finden, wie z.B. Brillengläser, von denen eine mehrjährige Lebensdauer erwartet und verlangt wird. Kennzeichnend für diese Gruppe ist üblicherweise die Anwendung einer in der Regel steifen Kunststoffmatrix mit mindestens 1 bis 2 mm Materialstärke. Zur letzteren Gruppe gehören solche Kunststoffmaterialien, die überwiegend in modischen Artikeln Verwendung finden, bei welchen keine Anforderungen an die Lebensdauer gestellt werden, beispielsweise Spielwaren oder Gebrauchstextilien wie T-Shirts. Die dabei verwendete Kunststoffmatrix ist meist flexibel gestaltet, z.B. in der Form von Folien, oder für sich allein nicht formbeständig, wie im Fall von Überzügen, Lacken und Beschichtungen. Die Materialstärke der photochromen Kunststoffmatrix beträgt dabei üblicherweise meist weniger als 1 Millimeter.

Im Stand der Technik finden derzeit ausschließlich Kunststoffmaterialien Verwendung, deren Polymer-Netzwerk durch eine chemische Reaktion wie Polyaddition oder Polykondensation aufgebaut wird. Der Aufbau kann auch stufenweise erfolgen, d.h. mittels verschiedener Initiatoren erfolgt erst eine Vor-, dann eine Endvernetzung bei höherer Temperatur. Bekannt sind beispielsweise Acrylate, insbesondere für Brillengläser, Epoxidharze (EP-A-0 556 646, JP-A-47 015 122, DE-A-33 08 186) oder Polyurethane und Polythiourethane (US-A-4,889,413). Für Kontaktlinsen finden auch Polyharnstoffe Verwendung (EP-A-0 735 097, EP-A-0 748 685). Aus FR 2,674,529 ist ein photochromer Kunststoffgegenstand auf Basis eines Polyallylcarbonats von Bisphenol A bekannt, wobei in den Kunststoffgegenstand nach dessen Polymerisation durch Diffusion ein photochromer Farbstoff eingebracht wird, wobei diese Färbetechnik dadurch bedingt ist, daß allylische Monomere sehr aggressive Initiatoren (PIP) in hohen Konzentrationen (ca. 3 %) erfordern. Das Einbringen eines photochromen Farbstoffs über Diffusion in einem Färbebad in das Kunststoffmaterial hat jedoch üblicherweise eine Verminderung der Photochromie und damit eine unzufriedenstellende Lebensdauer des photochromen Kunststoffgegenstands zur Folge.

Somit liegt der vorliegenden Erfindung die Aufgabe zugrunde, einen photochromen Kunststoffgegenstand bereitzustellen, der zum einen eine lange Lebensdauer zeigen soll und dessen photochrome Kunststoffmatrix zum anderen eine freie Formgestaltung, wie z.B. eine flexible Form, und eine schnelle Kinetik der darin eingebrachten photochromen Farbstoffe ermöglichen bzw. gewährleisten soll. Die Kunststoffmatrix soll zudem die Aktivierungsenergie der Rückreaktion, d.h. von der offenen in die geschlossene Form, nicht ungünstig beeinflussen, so daß die Eindunkelungsreaktion eine nur geringe Temperaturabhängigkeit zeigt.

Diese Aufgabe wird durch die in den Ansprüchen gekennzeichneten Gegenstände gelöst.

Insbesondere wird ein photochromer Kunststoffgegenstand bereitgestellt, umfassend ein transparentes Kunststoffmaterial, das aus mindestens zwei sich gegenseitig durchdringenden Polymer-Netzwerken voneinander verschiedener Polymermaterialien aufgebaut ist, und darin homogen verteilt mindestens einen photochromen Farbstoff.

Ein weiterer Gegenstand der vorliegenden Erfindung ist ein Verfahren zur Herstellung eines solchen photochromen Kunststoffgegenstands, worin die Polymer-Netzwerke der voneinander verschiedenen Polymermaterialien zeitlich nacheinander aufgebaut werden, d.h. der erfindungsgemäße Kunststoffgegenstand ist durch ein Verfahren erhältlich, worin ausgehend von dem bzw. den entsprechend gewählten ersten Monomer(en) zunächst ein erstes Polymer-Netzwerk, vorzugsweise ohne die Verwendung eines Initiators, aus einem ersten Polymermaterial aufgebaut wird und anschließend ausgehend von dem bzw. den entsprechenden gewählten zweiten Monomer(en) ein zweites, weiteres Polymer-Netzwerk derart aufgebaut wird, daß sich die beiden Netzwerke der voneinander verschiedenen Polymermaterialien gegenseitig durchdringen, wobei der mindestens eine photochrome Farbstoff bereits vor und/oder während der Polymerisation zugegeben wird, d.h. es wird eine Massefärbung durchgeführt, so daß der mindestens eine photochrome Farbstoff in dem Kunststoffmaterial darin homogen verteilt eingebracht wird.

Damit eine Durchdringung des ersten, bereits gebildeten Polymer-Netzwerks mit dem zweiten Polymer-Netzwerk erreicht wird, muß bzw. müssen das bzw. die entsprechende(n) zweite(n) Monomer(e) bereits während der Bildung des ersten Polymer-Netzwerks in dem Reaktionsgefäß zur Bildung des erfindungsgemäßen Kunststoffgegenstands vorliegen. Das bzw. die zweite(n) Monomer(e) unterliegen dabei zum einen dem Erfordernis, daß sie bei der Bildung des ersten Polymer-Netzwerks unter den gewählten Verfahrensbedingungen nicht beteiligt sein dürfen, d.h. die zweiten Monomerbausteine dürfen bei den gewählten Verfahrensbedingungen zur Bildung des ersten Polymer-Netzwerks nicht mit den ersten Monomerbausteinen und/oder mit sich selbst reagieren. Zum anderen darf keine Phasenseparierung des bzw. der zweiten Monomerbausteine von dem bereits gebildeten ersten Polymer-Netzwerk erfolgen.

Die Bildung des ersten Polymer-Netzwerks kann beispielsweise auf einer Polyaddition, vorzugsweise bei Raumtemperatur, beruhen, während die Bildung des zweiten Polymer-Netzwerks auf einer thermisch, radikalisch oder mittels UV-Licht initiierten Polymerisation, gegebenenfalls bei erhöhter Temperatur, beruhen kann.

Gemäß der vorliegenden Erfindung wird in dem photochromen Kunststoffgegenstand eine Kunststoffmatrix verwendet, die aus mindestens zwei sich gegenseitig durchdringenden Polymer-Netzwerken voneinander verschiedener Polymermaterialien aufgebaut ist. In einer bevorzugten Ausführungsform der vorliegenden Erfindung ist eines der mindestens zwei sich gegenseitig durchdringenden Polymer-Netzwerke aus Polyharnstoff oder Polyurethan, besonders bevorzugt aus Polyharnstoff, aufgebaut. Im Rahmen der vorliegenden Erfindung werden unter Polyharnstoffen bzw. Polyurethanen ganz allgemein linear oder verzweigtkettige Polymere der allgemeinen Struktur [-NH-R¹-NH-CO-NH-R²-NH-CO-]ₙ bzw. [-O-R¹-O-CO-NH-R²-NH-CO-]ₙ, d.h. über Harnstoffbindungen bzw. Urethanbindungen verknüpfte lineare oder verzweigtkettige Polymere verstanden, wobei die Reste R¹ und R² jeweils für aliphatische oder aromatische Reste oder für Gruppen wie z.B. Polyether und n für den Polymerisationsgrad mit n = 2 bis ∞ stehen. Ein solches Polymer-Netzwerk aus Polyharnstoff ist dabei durch Umsetzung von bi- oder trifunktionalen Aminen mit bi- oder multifunktionalen aliphatischen, cycloaliphatischen oder aromatischen Isocyanaten erhältlich. Als derartige bi- oder trifunktionale Amine können beispielsweise trifunktionale Polyether mit Molekulargewichten im Bereich von 3.000 bis 10.000 g/mol, vorzugsweise 4.000 bis 6.000 g/mol, an deren terminale Enden Aminogruppen gebunden sind, eingesetzt werden. Insbesondere können solche Amine eingesetzt werden, die von der Fa. Huntsman unter den Handelsnamen Jeffamine T 5000 bzw. D 2000 vertrieben werden. Als bi- oder multifunktionale aliphatische, cycloaliphatische oder aromatische Isocyanate können beispielsweise Phenylendiisocyanat, Tolylendiisocyanat, Hexamethylendiisocyanat (HDI) odere modifiziertes Isophorondiisocyanat eingesetzt werden. Insbesondere können solche Isocyanate eingesetzt werden, die von der Bayer AG unter den Handelsnamen Isocyanat 316, Isocyanat 3200 bzw. Isocyanat 3400 vertrieben werden. Das zweite, weitere Polymer-Netzwerk kann dann vorzugsweise aus Polyacrylat, Polymethacrylat oder einem Gemisch davon aufgebaut sein. Als acrylische Monomerbausteine können beispielsweise Methylacrylat, Ethylacrylat, Propylacrylat, Butylacrylat, Methyl(meth)acrylat, Ethyl(meth)acrylat, Propyl(meth)acrylat, Butyl(meth)acrylat, Trimethylolpropantrimethacrylat (TMPTMA) eingesetzt werden. Insbesondere kann TMPTMA, vertrieben von Röhm GmbH, eingesetzt werden. In dem erfindungsgemäßen Verfahren läuft die Umsetzung zum Polyharnstoff zur Schonung der photochromen Moleküle bevorzugt ohne Initiator bei Raumtemperatur unter Bildung des ersten Polymer-Netzwerks ab, wobei zur Vermeidung einer zu hohen Reaktionsgeschwindigkeit zwischen dem Amin-Baustein und dem Isocyanat-Baustein, d.h. zur Verzögerung der Polymerisationsreaktion, zu dem anfänglich vorgelegten Amin-Monomerbaustein beispielsweise Acrylsäure zugegeben werden kann. Die anschließende Umsetzung der acrylischen Monomere zu dem zweiten Polymer-Netzwerk erfolgt dann vorzugsweise bei Raumtemperatur mittels eines milden radikalischen Initiators oder ohne einen solchen Initiator aber bei erhöhter Temperatur. Üblicherweise finden dabei milde peroxidische Initiatoren, wie z.B. Tetrabutylperneodecanoat (TBPND), vertrieben von der Fa. Peroxidchemie, oder Laurylperoxid Anwendung. Eine derartige Verfahrensführung führt zu einer Durchdringung des ersten, bereits gebildeten Polymer-Netzwerks mit dem zweiten Polymer-Netzwerk. Das Mengenverhältnis des ersten Polymer-Netzwerkes zu dem zweiten Polymer-Netzwerk unterliegt keiner spezifischen Beschränkung. Vielmehr wird es gemäß den gewünschten Materialerfordernissen eingestellt, beispielsweise im Bereich von 10:90 bis 90:10, bezogen auf die Gewichtsprozente der entsprechenden Polymernetzwerke. In besonders vorteilhafter Weise wird bei einer derartigen Verfahrensführung das erste Polymer-Netzwerk ohne die Verwendung eines Initiators aufgebaut, während beim Aufbau des zweiten Polymer-Netzwerks, welches das erste Netzwerk durchdringt, nur geringe Mengen, beispielsweise im Bereich von 0,1 bis 1,5 %, eines milden Initiators wie beispielsweise Laurylperoxid oder TBPND eingesetzt werden. Alternativ kann der Aufbau des zweiten Polymer-Netzwerks ohne Verwendung eines solchen Initiators bei erhöhter Temperatur erfolgen. Ein derartiges Verfahren ermöglicht es, die photochrome(n) Verbindung(en) bereits vor der Polymerisation zuzugeben. Die wirtschaftlichen und technischen Vorteile einer Massefärbung gegenüber einer nachträglichen Oberflächenfärbung durch Diffusion, wie z.B. in FR 2,674,529 durchgeführt, sind einem auf diesem technischem Gebiet tätigen Fachmann wohlbekannt.

Die erfindungsgemäßen photochromen Kunststoffmaterialien zeichnen sich überraschenderweise durch hohe Transparenz, geringe Vorfärbung, gute Lebensdauer und eine schnelle Eindunkelungs- und Aufhellungskinetik der photochromen Reaktion aus.

Der in dem nachstehenden Beispiel hergestellte, erfindungsgemäße photochrome Kunststoffgegenstands zeigt im Vergleich zu einem herkömmlichen photochromen Polyacrylatmaterial ein verbessertes Eindunkelungs- und Authellungsverhalten.

Das erfindungsgemäße Kunststoffmaterial kann in jeder gewünschten Schichtdikke hergestellt werden. Es ist gut verarbeitbar, zeigt keine Blasenbildung bei der Polymerisation und ist je nach beabsichtigtem Anwendungszweck auch in den mechanischen Eigenschaften in einem weiten Bereich zwischen gelartig und formstabil einstellbar. In Abhängigkeit von der jeweiligen Materialstärke können die erfindungsgemäßen photochromen Kunststoffgegenstände direkt als photochrome Sichtscheiben, Visiere oder Bauscheiben verwendet werden. Alternativ können sie auch auf einen festen Träger bzw. ein festes Substrat, z.B. ein Polycarbonatsubstrat, aufgebracht werden. Ebenso ist die Verwendung zwischen Schutz- oder Trägerfolien möglich. Schließlich können die erfindungsgemäßen photochromen Kunststoffgegenstände auch auf Substrate auf Basis anorganischer Materialien, wie z.B. Mineralglas-Basis, die eine hohe Materialstärke aufweisen, wie z.B. Verbundglasscheiben, aufgebracht werden.

Die für die vorliegende Erfindung verwendbaren photochromen Verbindungen unterliegen keiner spezifischen Beschränkung. Vorzugsweise können sie aus der Klasse der Benzopyrane und höherer, davon abgeleiteter annellierter Ringsysteme, wie insbesondere Naphthopyrane oder Fluorenopyrane, ausgewählt werden. So können beispielsweise in 2,2-Stellung aromatisch bzw. heteroaromatisch substituierte [2H]-Naphtho(1,2-b)-pyrane, aber auch in 3,3 -Stellung entsprechend substituierte [3H]-Naphtho(2,1-b)-pyrane, wie z.B. die in PCT/DE 98/02820 beschriebenen Naphthopyrane und die in PCT/EP 99/05258 beschriebenen Indeno[2,1-f]naphtho[1,2-b]pyranderivate und/oder Spiro-9-fluoreno[1,2-b]pyranderivate verwendet werden. Beispielhaft können hier
3,13-Diphenyl-3-(4-diphenylaminophenyl)-13-hydroxy-6-methoxy-indeno[2,1-f]-naphtho[1,2-b]pyran,
13-(2,5-Dimethylphenyl)-3-(4-diphenylaminophenyl)-13-hydroxy-6-methoxy-3-phenyl-indeno[2,1-f]-naphtho[1,2-b]pyran,
13-(2,5-Dimethylphenyl)-3-(4-diphenylaminophenyl)-13-hydroxy-3-phenyl-indeno[2,1-f]-naphtho[1,2-b]pyran,
Spiro-9-fluoreno-13'-[3-(4-dimethylaminophenyl)-6-methoxy-3-phenyl-indeno[2,1-f]naphtho[1,2-b]pyran],
Spiro-9-fluoreno-13'-[3-(4-dimethylaminophenyl)-3-phenyl-indeno[2,1-f]naphtho-[1,2-b]pyran],
Spiro-9-fluoreno-13'-[3-(4-diphenylaminophenyl)-6-methoxy-3-phenyl-indeno[2,1-f]naphtho[1,2-b]pyran],
Spiro-9-fluoreno-13'-[3-(4-diphenylaminophenyl)-3-phenyl-indeno[2,1-f]naphtho-[1,2-b]pyran],
Spiro-9-fluoreno-13'-{3-[4-(N-morpholinyl)phenyl]-6-methoxy-3-phenyl-indeno[2,1-f]naphtho[1,2-b]pyran},
Spiro-9-fluoreno-13'-{3-[4-(N-morpholinyl)phenyl]-3-phenyl-indeno[2,1-f]naphtho-[1,2-b]pyran},
Spiro-9-fluoreno-13'-{6-methoxy-3-phenyl-3-[4-(N-piperidinyl)phenyl]-indeno[2,1-f]naphtho[1,2-b]pyran} und
Spiro-9-fluoreno-13'-{3-phenyl-3-[4-(N-piperidinyl)phenyl]-indeno[2,1-f]naphtho-[1,2-b]pyran} sowie beispielsweise
3-(4-Diphenylaminophenyl)-3-(2-fluorphenyl)-3H-naphtho[2,1-b]pyran,
3-(4-Dimethylaminophenyl)-3-(2-fluorphenyl)-3H-naphtho[2,1-b]pyran,
3-(2-Fluorphenyl)-3-[4-(N-morpholinyl)phenyl]-3H-naphtho[2,1-b]pyran,
3-(2-Fluorphenyl)-3-[4-(N-piperidinyl)phenyl]-3H-naphtho[2,1-b]pyran,
3-(4-Dimethylaminophenyl)-6-(N-morpholinyl)-3-phenyl-3H-naphtho[2,1-b]pyran,
6-(N-Morpholinyl)-3-[4-(N-morpholinyl)phenyl]-3-phenyl-3H-naphtho[2,1-b]pyran,
6-(N-Morpholinyl)-3-phenyl-3-[4-(N-piperidinyl)phenyl]-3H-naphtho[2,1-b]pyran,
6-(N-Morpholinyl)-3-phenyl-3-[4-(N-pyrrolidinyl)phenyl]-3H-naphtho[2,1-b]pyran,
3-Phenyl-3-(2-fluorphenyl)-3H-naphtho[2,1-b]pyran,
6-(N-Morpholinyl)-3,3-diphenyl-3H-naphtho[2,1-b]pyran
und
6-(N-Morpholinyl)-3-(4-methoxyphenyl)-3-phenyl-3H-naphtho[2,1-b]pyran
angeführt werden. Jedoch können auch die in US-A-5,753,146 und EP-A-0 562 915 beschriebenen Pyrane, sowie photochrome Farbstoffe anderer Klassen, beispielsweise Oxazine, wie z.B. die in US-A-5,753,146 beschriebenen Oxazine, oder Fulgide verwendet werden.

Der erfindungsgemäße photochrome Kunststoffgegenstand kann ferner eine oder mehrere die Kratzfestigkeit verbessernde Hartschichten aufweisen. Darüberhinaus können auch, vorzugsweise auf der dem Licht abgewandten Seite des Kunststoffgegenstands, ein oder mehrere herkömmliche Entspiegelungsschichten vorgesehen sein.

Die vorliegende Erfindung wird anhand des folgendes Beispiels näher erläutert. Das nachfolgende Beispiel soll nur exemplarisch die Herstellung einer photochromen Folie beschreiben. Dabei ist es einem auf diesem Fachgebiet tätigen Fachmann geläufig, durch entsprechende Änderungen der Rezeptur bzw. der Verfahrensführung härtere oder weichere Produkte herzustellen.

### Beispiel

In einem Becherglas werden 19,75 ml trifunktionelles aliphatisches Amin (T 5000 der Fa. Huntsman) und 0,75 ml Acrylsäure miteinander gemischt und kurz abreagieren gelassen. Das sich dabei erwärmende Gemisch wird wieder auf Raumtemperatur abgekühlt. Ferner wird ein Gemisch von 0,10 g Spiro-9-fluoreno-13'-{3-[4-(N-piperidinyl)phenyl]-6-methoxy-3-phenyl-indeno[2,1-f]naphtho-[1,2-b]-pyran} in 17,5 g TMPTMA (Röhm GmbH) hergestellt, wobei dieses bei 50°C so lange gerührt wird, bis sich eine klare, leicht hellblaue Lösung ergibt. 3,5 ml dieses Gemisches werden zusammen mit 1,90 ml difunktionalem aliphatischen Isocyanat 316 (Bayer AG) und 0,065 g Peroxid TBPND (Fa. Peroxidchemie) in die abgekühlte Amin-Acrylatmischung gegeben und gut verrührt. Dieses Gemisch wird anschließend zwischen zwei PET Folien zu einer photochromen Folie vergossen. Die Endvernetzung erfolgt bei 84°C im Ofen über eine Stunde.

Alternativ kann der bzw. die photochrome(n) Farbstoff(e) auch in die Amin-Acrylatlösung eingerührt werden.

Das Eindunkelungs- und Aufhellungsverhalten des in dem Beispiel hergestellten, erfindungsgemäßen photochromen Kunststoffgegenstands ist im Vergleich zu einem herkömmlichen photochromen Polyacrylatmaterial (gemessen bei 23°C, 15 min Eindunkelung bei 50 klux, 15 min Aufhellung im Dunkeln) verbessert. Das verbesserte Eindunkelungs- und Aufhellungsverhalten, d.h. die deutlich schnellere Eindunkelungs- und Aufhellungskinetik der photochromen Reaktion des entsprechend eingesetzten photochromen Farbstoffes in dem erfindungsgemäß verwendeten Kunststoffmaterial wird durch die sog. "Sägezahncharakteristik" der photochromen Reaktion ersichtlich.

## Patentansprüche

1. Photochromer Kunststoffgegenstand, umfassend ein transparentes Kunststoffmaterial, das aus mindestens zwei sich gegenseitig durchdringenden Polymer-Netzwerken voneinander verschiedener Polymermaterialien aufgebaut ist, und darin homogen verteilt mindestens einen photochromen Farbstoff.

2. Photochromer Kunststoffgegenstand nach Anspruch 1, wobei das eine der mindestens zwei sich gegenseitig durchdringenden Polymer-Netzwerke aus Polyharnstoff oder Polyurethan aufgebaut ist.

3. Photochromer Kunststoffgegenstand nach Anspruch 2, wobei das andere der mindestens zwei sich gegenseitig durchdringenden Polymer-Netzwerke aus Polyacrylat, Polymethacrylat oder einem Gemisch davon aufgebaut ist.

4. Verfahren zur Herstellung des photochromen Kunststoffgegenstands nach einem der Ansprüche 1 bis 3, worin zunächst ein erstes Polymer-Netzwerk, vorzugsweise ohne die Verwendung eines Initiators, aus einem ersten Polymermaterial aufgebaut wird und anschließend ein zweites, weiteres Polymer-Netzwerk derart aufgebaut wird, daß sich die beiden Netzwerke der voneinander verschiedenen Polymermaterialien gegenseitig durchdringen, wobei der mindestens eine photochrome Farbstoff bereits vor und/oder während der Polymerisation zugegeben wird.

5. Verfahren nach Anspruch 4, worin das erste Polymer-Netzwerk durch eine eine Polyadditionsreaktion, vorzugsweise bei Raumtemperatur und ohne Verwendung eines Initiators, gebildet wird, während das zweite Polymer-Netzwerk durch eine thermisch, radikalisch oder mittels UV-Licht initiierte Polymerisation gebildet wird.

6. Verwendung des photochromen Kunststoffgegenstands nach einem der Ansprüche 1 bis 3 in Verbindung mit anorganischen Materialien als Verbundwerkstoff.

## Claims

1. Photochromic plastic object comprising a transparent plastic material, which is composed of at least two interpenetrating polymer networks of respectively different polymer materials, and at least one photochromic dye homogeneously distributed therein.

2. Photochromic plastic object according to Claim 1, wherein one of the at least two interpenetrating polymer networks is composed of polyurea or polyurethane.

3. Photochromic plastic object according to Claim 2, wherein the other of the least two interpenetrating polymer networks is composed of polyacrylate, polymethacrylate or a mixture thereof.

4. Method for the production of the photochromic plastic object according to one of Claims 1 to 3, wherein firstly a first polymer network is composed from a first polymer material, preferably without the use of an initiator, and then a second further polymer network is composed in such a way that the two networks of respectively different polymer materials interpenetrate, wherein the at least one photochromic dye is added before and/or during the polymerisation.

5. Method according to Claim 4, wherein the first polymer network is formed by a polyaddition reaction, preferably at room temperature and without the use of an initiator, whereas the second polymer network is formed by a thermally, radically initiated polymerisation or a polymerisation initiated by means of uv light.

6. Use of the photochromic plastic object according to one of Claims 1 to 3 in association with inorganic materials as composite material.

## Revendications

1. Objet en plastique photochrome, comprenant un matériau plastique transparent, qui est constitué au moins de deux réseaux polymères composés de matériaux polymères différents qui s'interpénètrent, et dans lequel au moins un colorant photochrome est réparti de façon homogène.

2. Objet en plastique photochrome selon la revendication 1, dans lequel au moins un des deux réseaux polymères qui s'interpénètrent est composé de polyurée ou de polyuréthane.

3. Objet en plastique photochrome selon la revendication 2, dans lequel le deuxième des deux réseaux polymères au moins qui s'interpénètrent est composé de polyacrylate, de polyméthacrylate ou d'un mélange de ceux-ci.

4. Procédé de fabrication de l'objet en plastique photochrome selon l'une des revendications 1 à 3, dans lequel tout d'abord un premier réseau polymère, de préférence sans recours à un initiateur, est composé d'un premier matériau polymère puis un deuxième réseau polymère est fabriqué de telle façon que les deux réseaux de deux matériaux polymères différents s'interpénètrent, l'un des colorants photochromes étant au moins ajouté déjà avant et/ou pendant la polymérisation.

5. Procédé selon la revendication 4, dans lequel le premier réseau polymère est formé par une réaction de polyaddition, de préférence à température ambiante et sans recours à un initiateur, tandis que le deuxième réseau polymère est formé par une polymérisation initiée de façon thermique, radicale ou au moyen de lumière UV.

6. Utilisation d'un objet en plastique photochrome selon l'une des revendications 1 à 3 en liaison avec des matériaux anorganiques comme matériaux composites.
